(19) **Europäisches Patentamt**

**European Patent Office**

**Office européen des brevets**

(11) Publication number: **0 263 554 B1**

# (12) EUROPEAN PATENT SPECIFICATION

(45) Date of publication of patent specification :
05.06.91 Bulletin 91/23

(21) Application number : 87201844.5

(22) Date of filing : 25.09.87

(51) Int. Cl.⁵ : **B62J 15/00**

(54) **Vehicle with reducible overall dimensions.**

(30) Priority : 01.10.86 IT 2186986

(43) Date of publication of application :
13.04.88 Bulletin 88/15

(45) Publication of the grant of the patent :
05.06.91 Bulletin 91/23

(84) Designated Contracting States :
AT BE CH DE ES FR GB GR LI NL

(56) References cited :
DE-A- 1 920 112
FR-A- 971 910
US-A- 3 354 976
US-A- 4 054 300

(73) Proprietor : **Gaddi, Bruno**
**Viale Giovanni Pisano, 60**
**I-56100 Pisa (IT)**

(72) Inventor : **Gaddi, Bruno**
**Viale Giovanni Pisano, 60**
**I-56100 Pisa (IT)**

(74) Representative : **Faraggiana, Vittorio, Dr. Ing.**
**et al**
**Ingg. Guzzi e Ravizza S.r.l. Via Boccaccio, 24**
**I-20123 Milano (IT)**

## Description

The present invention concerns a two or three-wheeled vehicle, motorized or not, having a folding structure so that the overall dimensions can be reduced when not in use, as set out in the first part of cl. 1 ; such a vehicule is shown in each of the documents FR-A-971910, US-A-355 4 976 and DE-A-1 920 112.

The invention refers to all the vehicles having a single front steering-wheel, thus as bicycles, motorized bicycles, motor-cycles and three-wheeled vehicles.

The invention is illustrated and described here on with reference to a light motor cycle - motorized bicycle, as in this instance the difficulties to overcome are superior to those encountered for a bicycle and as the system is less important for big motor-cycles. The bicycle is therefore the other important receiver of the invention.

The prior art has proposed different solutions in order to obtain a motor vehicle overall dimensions reduction : the problem is made more complicated by even antithetic requirements of such a vehicle. For a satisfactory solution of the problem it is necessary that the vehicle may be reduced both in height and in length ; the vehicle in position reduced in dimension must keep the motor and gas tank trim substantially unchanged respective of the normal use positions, in order to avoid gas spillages.

It is further necessary that the operations required from the user to reduce or restore the vehicle overall dimensions be simple, realizable and such as not to require excessive efforts, and the vehicle must show at last an unexceptionable stability and safety and an aesthetics and sitting capacity not penalized by its dimensionally reducible structure.

It has been proposed for instance to carry out vehicles where a possibility of reduction in height, by handle-bar and saddle folding is foreseen, without reduction in length : by this solution it's possible to obtain a vehicle having really reduced overall dimensions only if it's realized with a very reduced pitch and this heavily penalizes the vehicle stability.

In order to obtain a vehicle reducible length it has been proposed to realize a frame hinged as a quadrilateral, to allow for some folding (see for example US-A-3 354 976). This solution results rather complex constructively, and chiefly influences in a strongly negative way the vehicle look. Also the solution proposed in the past foreseeing the possibility of dismounting the motor from a frame being subsequently foldable shows unacceptable inconveniences, because of an excessively complicated manoeuvre for vehicle reduction. One of the past proposed solutions is the one claimed, for mopeds, in the patent FR-A-971 910 (1950) with a solution of reducing overall front dimensions of the vehicle also adopted, for motorcycles, in the patent DE-A-1 920 112 (1970). These are vehicles in which to the steering shaft are fixed, in a rotatable way, a front wheel supporting fork and a handle-bar, the fork when folded carrying the front wheel towards the vehicle center, and the handle-bar when folded being placed in a orizontal position. That solution meets many before said requirements because the reduction of dimensions is great and the vehicle in operating position is clear, but folding of the fork is not easy as the fork is low and it is hinged with the steering shaft, which is also rotatable. In the other patent US-A-3 354 976 (1967) a similar folded configuration is proposed, but that is obtained not folding front wheel fork but partially disconnecting from the frame the steering sleeve, which is folded carrying rearward the fork. The object of the present invention is referred to the improvement of the solution proposed in the prior art, for instance said FR-A-971 910 and DE-A-1 920 112 patents, by means of a kinematic connection between handle-bar and fork, hinged with the rotatory element of the steering (for example a hub or a shaft). In this way folding can be done only acting on handle-bar, while fork is led by kinematic connection. Folding become simple as well replacing to the operative position.

According to the invention this is obtained carrying out a two or three-wheeled vehicle having a single front steering-wheel with deformable structure in contract configuration including a frame to which is frontally supported in a rotatable way a steering element to which the fork supporting the front wheel is connected, said fork and an handle-bar being bound in a rotatable way to said steering element along axes transverse to the steering element rotation axis and parallel to the front wheel axis, the fork rotation carrying the front wheel towards the vehicle center, and the handle-bar rotation causing its upsetting in the sense of placing in a substantially horizontal way, to bring the vehicle in its contracted configuration, characterized by that the fork and handle-bar are interconnected by a kinematic connection to displace simultaneously from their position corresponding to the vehicle running trim to the position corresponding to the vehicle contracted configuration.

To make better clear the purposes and the characteristics of the present invention an exemplifying form of embodiment will be here described illustrated by the enclosed drawings where :

    – Figs. 1 and 2 show general diagrammatic views of a vehicle according to the invention in positions of running trim and with reduced overall dimensions respectively ;

    – Fig. 3 is a top view along the direction III indicated in Fig.4 of a vehicle detail of Fig.1 ;

    – Figs.4 and 5 are sectional views along the plane of trace IV-IV indicated in Fig.3, in different operative positions.

    – Fig. 6 is a partial sectional view along Fig.4 plane of trace VI-VI.

– Fig. 7 shows a partial side view of a different motor-cycle embodiment analogous to that of Fig. 1

– Fig. 8 is a section according to the Fig.7 plane of trace VIII-VIII.

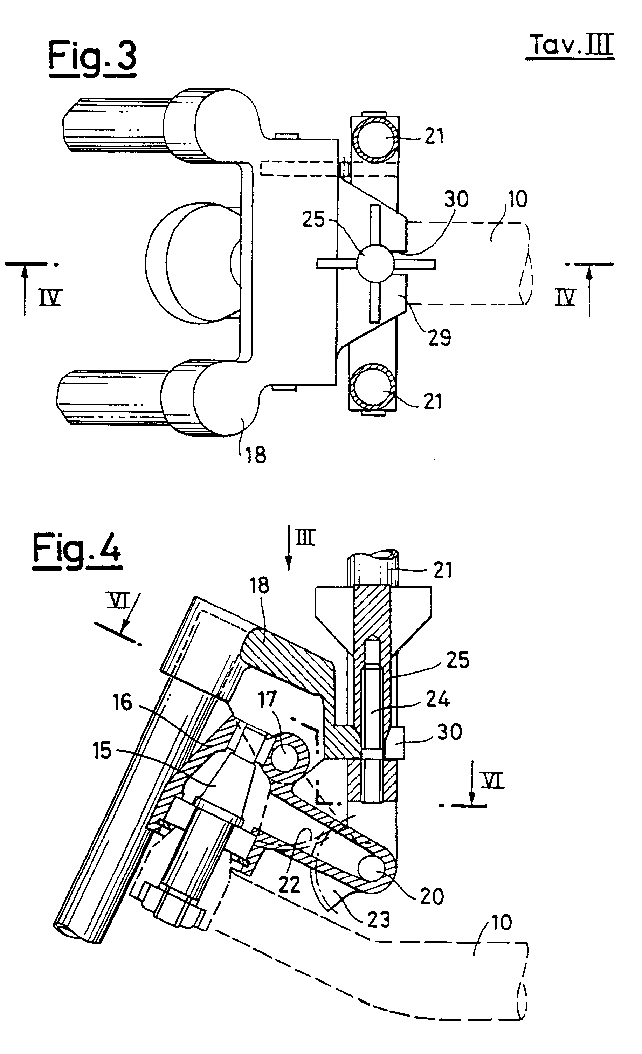

The vehicle includes a frame 10 to which is supported in 11 a motor-wheel group 12 conventional in itself and of unimportant configuration. In the scheme shown here the motor-wheel group is hinged in 11, to ensure the back spring system of the wheel supported by the swinging bar 13 ; nevertheless any other type of rigid or elastic wheel back suspension and motor binding to the frame can be adopted, without particular limitations. The vehicle shows at the front frame end a steering 15 pivoting better shown in Fig.4, on which a hub 16 is rotating. To the hub 16 is pivoted in 17 a fork 18 that supports front wheel 19, and that according to a completely known art can incorporate springing systems.

To the same support 16 it's hinged in 20 an handle-bar 21 inferior extremity. On the fork 18 head is foreseen solidal a toothed sector 22 that meshes with a corresponding toothed sector 23 solid to the lower handle-bar extremity. Besides on the handle-bar a screw 24 is mounted that receives a fly nut 25 ; on the fork 18 is realized a protrusion 29 with an open seat 30 into which penetrates the screw 24 when the vehicle is in the position depicted in Fig.4, and the bolt 25 screwing causes its engagement with the seat 30 so as to reciprocally block the handle-bar and fork. This direct bond between handle-bar and fork results particularly effective for blocking the parts, because it, with the pivotings 17 and 20 forms a highly indeformable structure.

To the frame 10 is further supported in 31 a saddle 33 support member 32.

The vehicle operation according to the invention, explained in the drawings, is easily understandable by the examination of the very drawings.

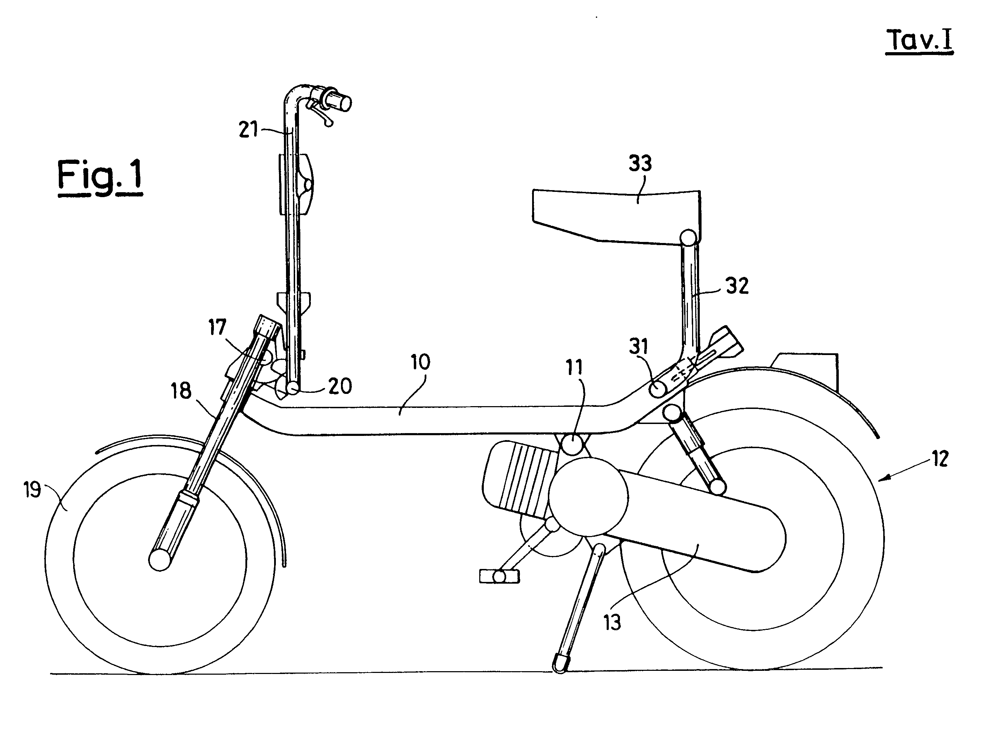

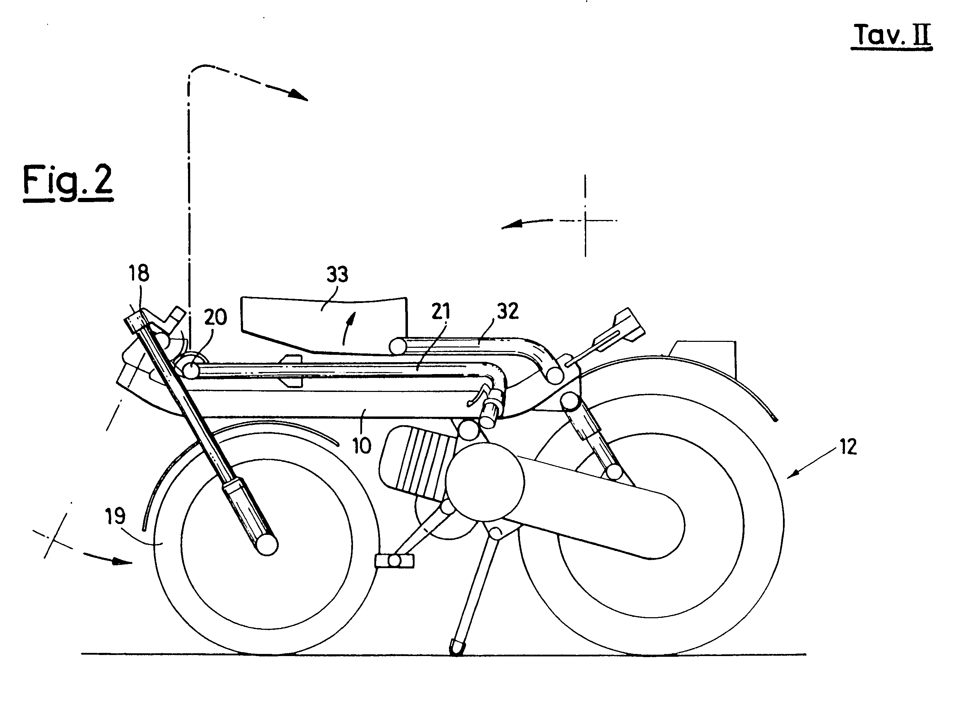

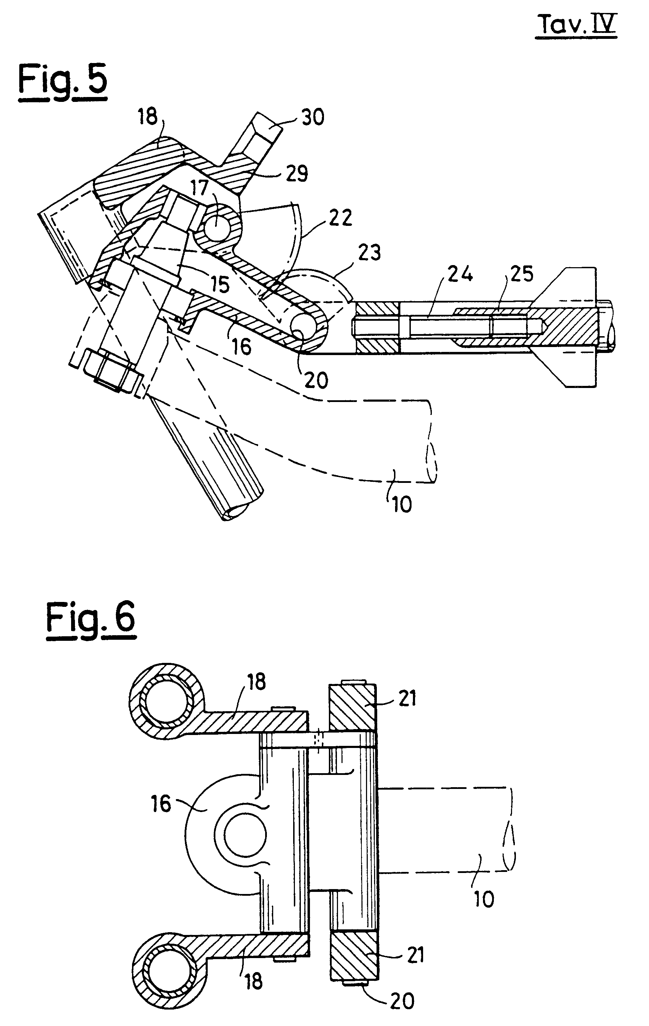

When the vehicle is in position of Fig.1, unscrewing bolt 25 the fork and handle-bar reciprocal motion is allowed ; putting upside down the latter downwords, a fork rotation is induced by sectors 22 and 23 meshing, and the fork carries front wheel towards the vehicle center, up to placing it partially or totally underneath the frame as shown in Fig. 2 and Fig. 5, where the reciprocal position assumed by the various parts articulated to the steerig 16 support is better visible in detail. During and after the overall dimensions reduction the vehicle remains supported on the trestle and on the rear wheel : all its back part keeps its trim and look.

Consequentely the operator has not to substain weights and also the scarcely experienced one can realize the necessary manoeuvres.

Also the support 32 and saddle 33 may next be upset as shown again in Fig. 2, the upsetting and saddle overall dimension reducing mechanism is not here described in detail, being a matter of extremely simple kinematism that can take varied configurations. It's only necessary indeed to foresee that the saddle be supported with its rest in an articulated and slidable way, blockable by any means into operative use position.

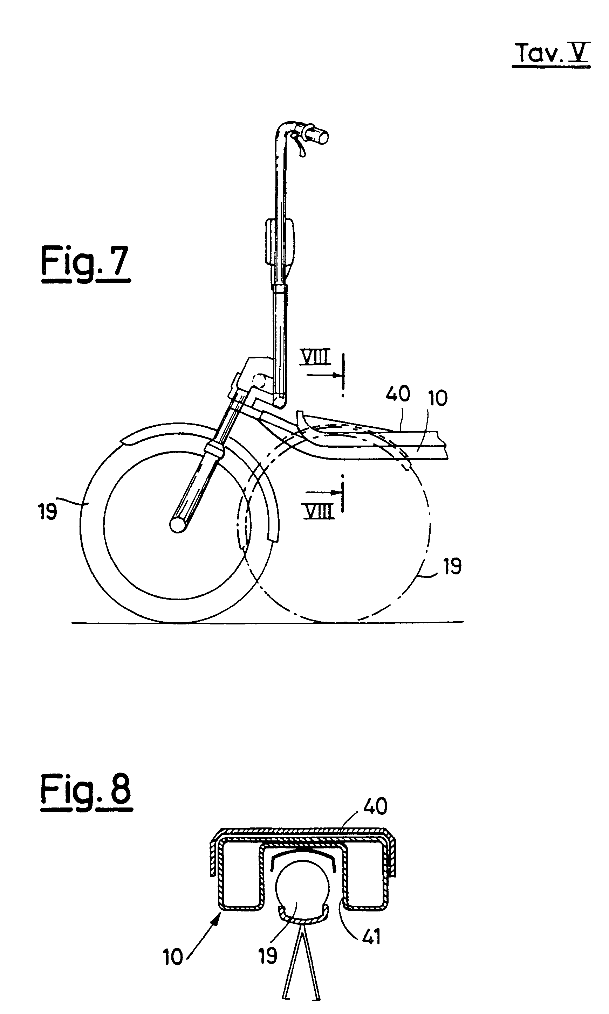

The structure deformability is obtained without limitations and alterations not admissible by the frame structure. It's sufficient that the frame allows only to accomodate the front wheel in the contracted position. This can also be accomplished by foreseeing a corresponding frame seat. It can in particular maintain the low floor board configuration, often considered advantageous in light motor-cycles. An embodiment example of this concept is illustrated in Figs. 7 and 8 where a motor-cycle having a general configuration corresponding to that of the preceding figures in which the frame 10 shows a low floor board plane 40 showing a substantially U shaped section at least in the zone where the wheel sets in contracted position, so forming a seat 41 that partially receives the same wheel. In this way the floor board top plane results somewhat low. One should notice that, the fork 18 upsetting backwards on the vehicle leads to a substantial reduction in its length, whereas the handle-bar upsetting causes a corresponding vehicle front part reduction in height. It has been shown in the embodiment example how the handle-bar and fork movements are interdependent by virtue of kinematic connection among the parts consisting of the sector 22 and 23. The technician understands how this interconnection may have extremely various forms of kinematic embodiments by the adoption of mechanical equivalents foreseeing gear articulated levers and the like.

The solution shown is particularly advantageous because constructively simple, and because apt to accomplish by simple sectors radii dimensioning, the proper ratio between the handle-bar and fork overturning angles, so that both these parts go to set simultaneously respectively in operative position. Besides the kinematic connection existance between handle-bar and fork it's not strictly necessary because both parts may be displaced by hand between their extreme positions, corresponding to the vehicle running trim or folded position. The existence of such a connection is nevertheless particularly advantageous, because it allows the operator to bring also the fork into a contracted vehicle position, by a simple action on the handle-bar.

Likewise the handle-bar and fork blocking means can have various configurations into respective correct positions required by the vehicle gear, exemplified in the described embodiment by the screw tie rod 24-25 acting directly between the two parts, blocking them absolutely safely, to set up a rigid system with the hub. As above mentioned, the embodiment explained in the enclosed drawings must be understood as purely illustrative of how the principles of the present invention can be practically carried out and many variations and improvements can be introduced without going out of the scope of the present invention, as defined in the appended claims.

## Claims

1. A two or three-wheeled vehicle having a single front steering-wheel with deformable structure in contract configuration including a frame (10) to which is frontally supported in a rotatable way a steering element (16) to which the fork (18) supporting the front wheel (19) is connected, said fork (18) and an handlebar (21) being bound in a rotatable way to said steering element (16) along axes transverse to the steering element rotation axis and parallel to the front wheel axis the fork rotation carrying the front wheel (19) towards the vehicle center, and the handle-bar (21) rotation causing its upsetting in the sense of placing in a substantially horizontal way, to bring the vehicle in its contracted configuration, characterized by that the fork (18) and handle-bar (21) are interconnected by a kinematic connection to displace simultanously from their position corresponding to the vehicle running trim to the position corresponding to the vehicle contracted configuration.

2. A vehicle according to claim 1 characterized by that fork and handle-bar blocking means are foreseen into position corresponding to the vehicle running trim.

3. A vehicle according to claim 1, characterized by that said kinematic connection is composed of two toothed wheel sectors reciprocally meshing and each bound respectively to said handle-bar and said fork, coaxially to the relevant pivotings to the steering hub.

4. A vehicle according to claim 2 characterized by that said blocking means operate in the sense of binding said handle-bar and said fork.

5. A vehicle according to claim 1, characterized by that the frame foresees at last frontally a structure, open at last below to form a seat in which the front wheel is partly received into vehicle contracted configuration.

## Ansprüche

1. Zweirädriges bzw. dreirädriges Fahrzeug mit einem einzigen, einen in eine zusammengeklappte Ausbildung verformbaren Aufbau aufweisenden Lenkvorderrad, bestehend aus einem Rahmen (10), der vorne drehbar eine Lenknabe (16) trägt, mit der die das Vorderrad (19) halternde Gabel (18) verbunden ist, wobei die Gabel (18) und eine Lenkstange (21) drehbar mit der Lenknabe (16) gemäß zur Drehachse der Nabe querliegenden und zur Achse des Vorderrades (19) parallelen Achsen verbunden sind, wobei die Verschwenkung der Gabel (18) das Vorderrad (19) zur Mitte des Fahrzeuges führt, und wobei die Verschwenkung der Lenkstange (21) die Klappbewegung derart hervorruft, daß sie sich im wesentlichen horizontal anordnet, um das Fahrzeug in seine zusammengeklappte Ausbildung zu bringen, dadurch gekennzeichnet, daß die Gabel (18) und die Lenkstange (21) durch eine kinematische Verbindung derart miteinander verbunden sind, daß sie zusammen selbsttätig von ihrer der Fahrtposition entsprechenden Lage des Fahrzeuges in die der zusammengeklappten Ausbildung entsprechenden Lage des Fahrzeuges verstellt werden.

2. Fahrzeug nach Anspruch 1, dadurch gekennzeichnet, daß Mittel zur Verspannung der Gabel und der Lenkstange in der der Fahrtposition entsprechenden Lage vorgesehen sind.

3. Fahrzeug nach Anspruch 1, dadurch gekennzeichnet, daß die kinematische Verbindung aus zwei miteinander kämmenden Zahnradsektoren besteht, die jeweils mit der Lenkstange und mit der Gabel koaxial zu entsprechenden Anlenkungen an der Lenknabe verbunden sind.

4. Fahrzeug nach Anspruch 2, dadurch gekennzeichnet, daß die Spannmittel im Sinne einer Bindung zwischen Lenkstange und Gabel wirken.

5. Fahrzeug nach Anspruch 1, dadurch gekennzeichnet, daß der Rahmen mindestens vorne mit einem Aufbau versehen ist, der mindestens unten zur Bildung einer Aufnahme offen ist, in die das Vorderrad in zusammengeklappter Stellung teilweise aufgenommen wird.

## Revendications

1. Véhicule à deux ou trois roues ayant une unique roue avant orientable avec une structure déformable en configuration contractée comprenant un cadre (10) par lequel est porté à l'avant, de manière tournante, un élément de direction (16) auquel est reliée la fourche (18) portant la roue avant (19), cette fourche (18) et un guidon (21) étant réunis de manière tournante avec ledit élément de direction (16) autour d'axes transversaux à l'axe de rotation de l'élément de direction et parallèles à l'axe de la roue avant, la rotation de la fourche déplaçant la roue avant (19) en direction du centre du véhicule et la rotation du guidon (21) causant son refoulement dans le sens de le placer de façon substantiellement horizontale, pour mettre le véhicule à sa configuration contractée, caractérisé en ce que la fourche (18) et le guidon (21) sont interconnectés par une liaison cinématique pour le déplacement simultané à partir de leur position qui correspond à l'état de roulement du véhicule à la position qui correspond à la configuration contractée du véhicule.

2. Véhicule selon la revendication 1 caractérisé en cd qu'un moyen de blocage de la fourche et du guidon est prévu à la position qui correspond à l'état de roulement du véhicule.

3. Véhicule selon la revendication 1 caractérisé en ce que la connexion cinématique est composée de deux secteurs dentés engrenant mutuellement et réunis chacun respectivement au guidon et à la fourche, coaxialement aux axes de pivotement correspondant du moyeu de direction.

4. Véhicule selon la revendication 2 caractérisé en ce que le moyen de blocage fonctionne dans le sens d'une liaison du guidon et de la fourche.

5. Véhicule selon la revendication 1 caractérisé en ce que le cadre présente de l'avant vers l'arrière une structure ouverte en dessous vers l'arrière pour constituer un siège dans lequel la roue avant est reçue partiellement à la configuration contractée du véhicule.

## Fig.1

EP 0 263 554 B1

# Fig.2

EP 0 263 554 B1

# Fig.3

# Fig.4

# Fig.5

# Fig.6

Tav. V

Fig. 7

Fig. 8